# EUROPÄISCHE PATENTSCHRIFT

(11) **EP 0 987 590 B1**
(45) Veröffentlichungstag und Bekanntmachung des Hinweises auf die Patenterteilung: **02.01.2002**
(21) Anmeldenummer: 98117362.8
(22) Anmeldetag: 14.09.1998
(51) Int. Cl.: G03B 27/62

(54) **Filmpatronenladevorrichtung und damit versehene Filmbühne**
Film cartridge loading device and platen provided with the same
Dispositif de chargement pour cartouche de film et platine muni de celui-ci

(43) Veröffentlichungstag der Anmeldung: 22.03.2000
(73) Patentinhaber: GRETAG IMAGING AG, 8105 Regensdorf (CH)
(72) Erfinder: Koch,Willy, 8112 Otelfingen (CH)
(74) Vertreter: Schwabe - Sandmair - Marx

(56) Entgegenhaltungen:
- EP-A- 0 717 310
- EP-A- 0 814 371
- EP-A- 0 851 291
- US-A- 5 767 943

## Beschreibung

Die Erfindung betrifft eine Ladevorrichtung für eine einen Film enthaltende Film-Patrone gemäss dem Oberbegriff des Anspruchs 1 sowie eine Filmbühne für ein fotografisches Kopiergerät mit einer solchen Ladevorrichtung. Eine solche Ladevorrichtung und eine solche Filmbühne sind aus EP 0 814 371 A bekannt.

Die in den letzten Jahren aufgekommenen sogenannten APS-Filme (Advanced Photographic System) zeichnen sich unter anderem dadurch aus, dass die Lagerung und die Verarbeitung (mit Ausnahme der Entwicklung) der Filme stets in bzw. aus den dafür speziell ausgebildeten APS-Film-Patronen erfolgt, d.h. die Filme werden für die Verarbeitung (wiederum mit Ausnahme der Entwicklung) nicht vollständig aus den Patronen entnommen und nach der Verarbeitung wieder in die Patronen zurückgespult. An den Patronen sind ferner einstellbare Kodierungen vorgesehen, anhand welcher festgestellt werden kann, ob sich in den Patronen ein unbelichteter, ein teilweise belichteter, ein vollständig belichteter oder ein bereits entwickelter Film befindet.

Sogenannte Minilabs sind fotografische Kopiergeräte, die neben dem eigentlichen Kopierteil (Belichtungsgerät, Printer) auch noch einen Entwicklungsteil für das fotografische Kopiermaterial sowie ggf. auch einen Filmentwicklungsteil enthalten. Minilabs und andere fotografische Kopiergeräte sind in der Regel mit einer sogenannten Filmbühne ausgestattet, die eine präzise Zuführung der zu kopierenden Filme in den Belichtungsstrahlengang erlaubt.

Bei Minilabs für herkömmliche Filme z.B. des 135er-Formats wird ein zu kopierender Film manuell oder mittels einer geeigneten Ladevorrichtung in die Filmbühne geladen und dabei den in der Filmbühne vorgesehenen Filmtransportmitteln übergeben. Diese transportieren den Film dann entlang eines Filmpfads und positionieren die einzelnen Bildrahmen im Belichtungsfenster der Filmbühne, wo der Belichtungsvorgang stattfindet. Wenn der letzte Bildrahmen kopiert ist, wird der Film in der Regel aus der Filmbühne ausgegeben.

Für die Verarbeitung von APS-Filmen eingerichtete Minilabs benötigen aufgrund der oben angesprochenen Eigenheiten von solchen Filmen eine speziell angepasste Filmbühne bzw. Ladevorrichtung für APS-Filme. Diese ist in der Regel mit einer Halterung zur Positionierung einer einzelnen APS-Film-Patrone in einer definierten Orientierung sowie mit einem Ab- und Aufspulmechanismus versehen, welcher den APS-Film aus der Patrone herausführt und an die Filmtransportmittel der Filmbühne übergibt sowie den Film nach dem Kopiervorgang wieder in die Patrone zurückspult. Daraufhin kann die Patrone wieder aus der Ladevorrichtung entnommen werden.

Minilabs decken eine Leistung bis ca. 100 Kopieraufträge (Einzelfilme) pro Stunde ab. Aber schon bei einer kleinerer Leistung von z.B. 40 Kopieraufträgen pro Stunde bedeutet dies, dass der Operator etwa alle 1½ Minuten eine APS-Patrone einzulegen und wieder zu entnehmen hat. Um die Leistung des Minilabs voll ausnutzen zu können, muss also der Operator praktisch ständig am Minilab stehen.

Durch die vorliegende Erfindung soll nun die Handhabung eines Kopiergeräts, speziell Minilabs, bei der Verarbeitung speziell von APS-Filmen so vereinfacht werden, dass der Operator für die Zuführung der Film-Patronen, insbesondere APS-Film-Patronen weniger Zeit benötigt. Insbesondere soll durch die Erfindung eine Ladevorrichtung für speziell APS-Film-Patronen so verbessert werden, dass gleichzeitig mehrere Patronen zugeführt werden können. Eine weitere Aufgabe der Erfindung besteht in der entsprechenden Verbesserung einer für die Verarbeitung von insbesondere APS-Film ausgelegten Filmbühne für ein fotografisches Kopiergerät.

Die Lösung dieser der Erfindung zugrundeliegenden Aufgaben ergibt sich aus den im kennzeichnenden Teil des unabhängigen Anspruchs 1 beschriebenen Merkmalen der erfindungsgemässen Ladevorrichtung.

Gemäss dem Hauptgedanken der Erfindung werden also gleichzeitig mehrere APS- oder vergleichbare Film-Patronen in eine Vorratskammer geladen und dann nach einander vollautomatisch in Arbeitsposition gebracht und danach ausgeworfen. Der Operator braucht somit weniger oft an das Minilab zu gehen und ist dazwischen für andere Aktivitäten frei.

Weitere vorteilhafte und besonders zweckmässige Ausgestaltungen der erfindungsgemässen Ladevorrichtung sind in den abhängigen Ansprüchen beschrieben.

Im folgenden wird die Erfindung anhand der Zeichnung und im Zusammenhang mit APS-Film und APS-Film-Patronen beispielsweise näher erläutert. Es zeigen:
- Fig.1: eine Gesamtansicht eines Ausführungsbeispiels einer erfindungsgemässen Filmbühne,
- Fig. 2: eine Gesamtansicht der Filmbühne bei abgenommener Verschalung,
- Fig. 3-5: das Innere der Filmbühne in drei charakteristischen Bewegungsphasen der zur Filmbühne gehörenden Ladevorrichtung , wobei einige Komponenten der Übersichtlichkeit halber weggelassen sind,
- Fig. 6-9: eine isolierte Darstellung der erfindungsrelevanten Teile der Ladevorrichtung in fünf charakteristischen Bewegungsphasen,
- Fig. 10: einen Schnitt durch einen Teil der Filmbühne mit einer in Arbeitsposition befindlichen Filmpatrone und
- Fig. 11-12: eine isolierte Darstellung der erfindungsrelevanten Teile der Ladevorrichtung in zwei weiteren charakteristischen Bewegungsphasen.

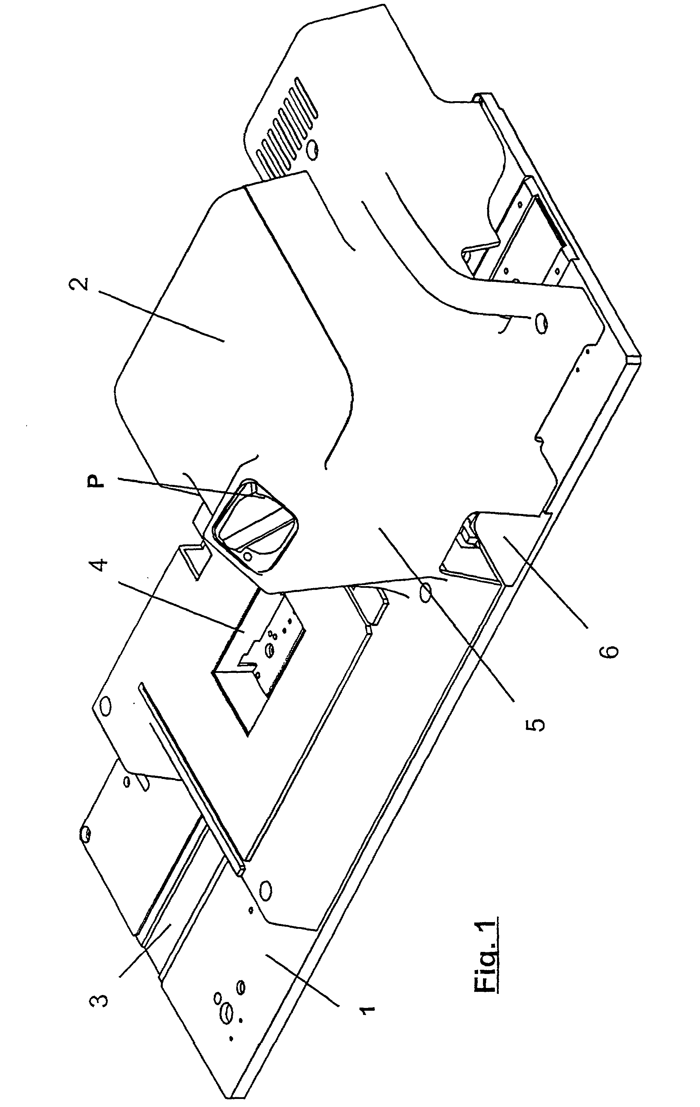

Die in Fig. 1 als Ganzes dargestellte, für die Verarbeitung von APS-Film ausgelegte Filmbühne weist eine im wesentlichen ebene Grundplatte 1 und eine darauf befestigte Abdeckung 2 auf. In der Grundplatte 1 ist eine Filmführung 3 ausgebildet, welche einen geradlinigen Filmtransportpfad definiert. In der Abdeckung 2 ist ein Belichtungsfenster 4 ausgespart, unter dem die Filmführung 3 durchläuft und durch welches bei in ein Kopiergerät bzw. Minilab eingesetzter Filmbühne der Belichtungsstrahlengang verläuft. Weiters ist in der Abdeckung 2 ein Schacht 5 ausgebildet, welcher eine weiter unten noch im Detail erläuterte, im wesentliche rohrförmige Vorratskammer für APS-Film-Patronen P umschliesst. Am Fussende des Schachts ist eine Auswurföffnung 6 ausgespart.

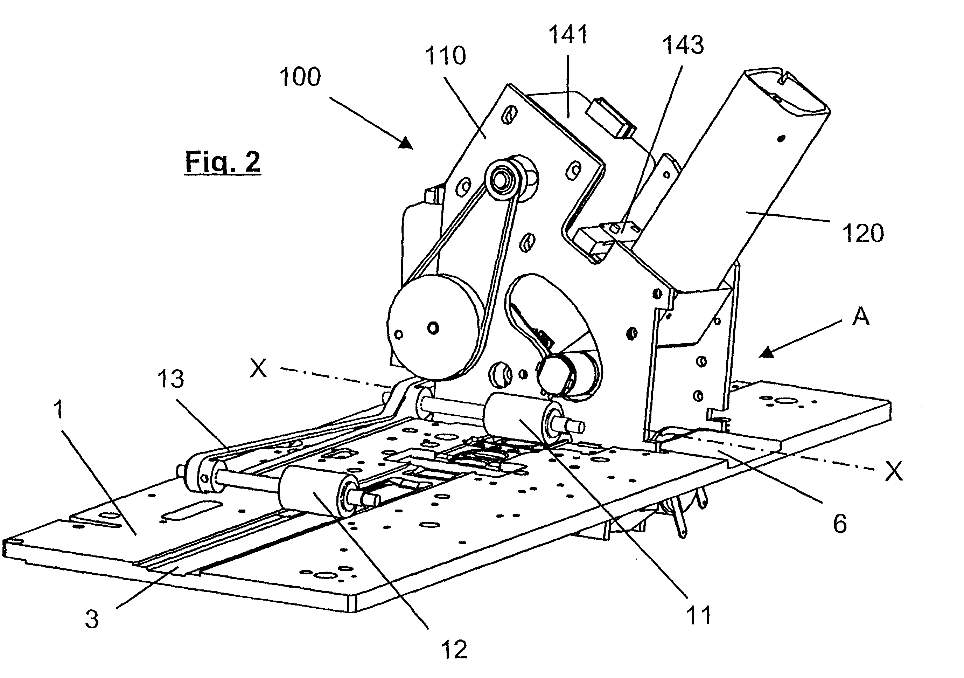

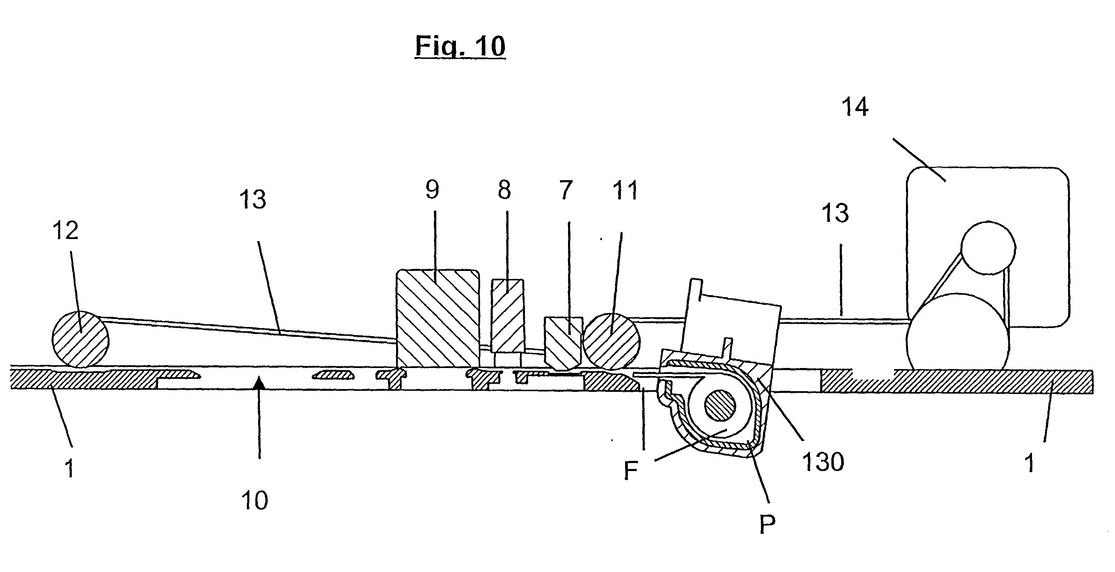

Die Figur 2 zeigt die für die Erfindung relevanten Teile im Inneren der Belichtungsbühne. Zu erkennen sind zwei Transportwalzen 11 und 12, die über einen Antriebsriemen 13 von einem in Fig. 10 gezeigten Motor 14 angetrieben sind, sowie eine als Ganzes mit 100 bezeichnete Ladevorrichtung für APS-Film-Patronen. Die Transportwalzen 11 und 12, der Antriebsriemen 13 und der Motor 14 bilden zusammen Filmtransportmittel, welche einen ihnen von der Ladevorrichtung 100 übergebenen APS-Film längs der Filmführung 3 vorwärts und rückwärts transportieren können.

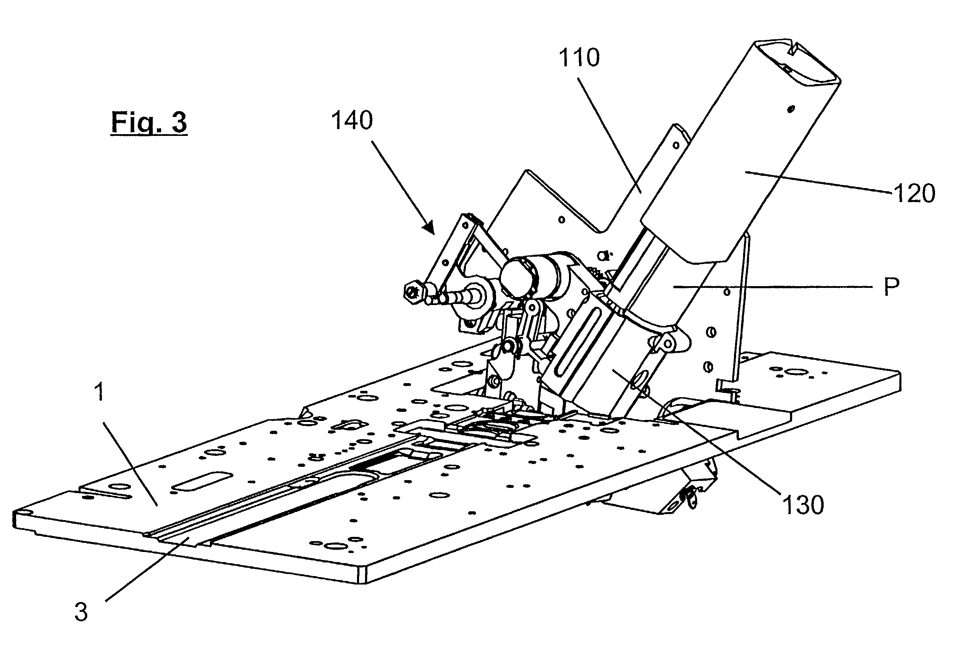

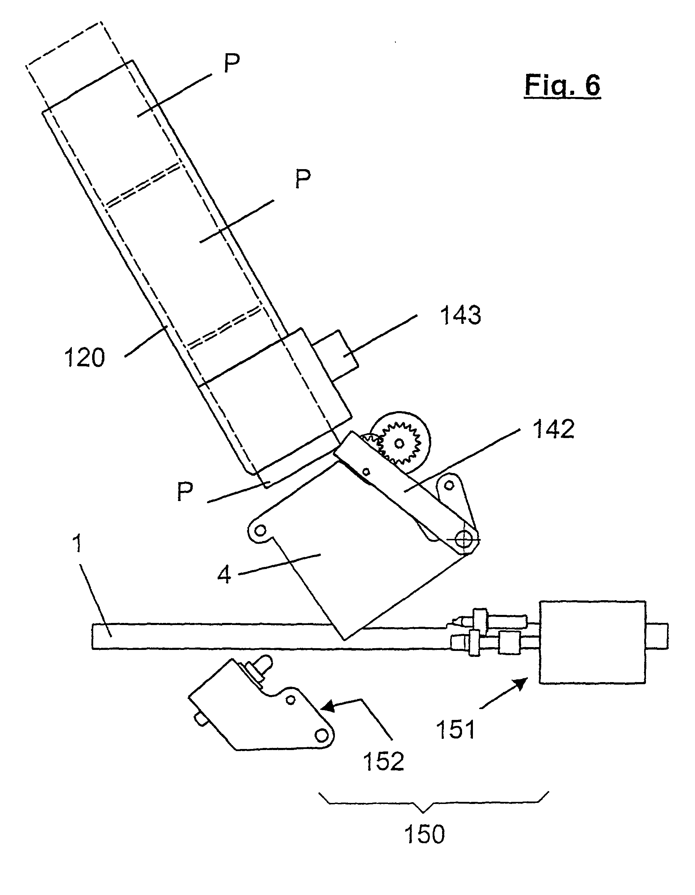

Die Ladevorrichtung 100 umfasst im wesentlichen einen Montagerahmen 110, in welchem eine feststehende, rohrförmige Vorratskammer 120 für mehrere APS-Film-Patronen P, eine bewegliche Transferkammer 130 (Fig.3) und ein gesamthaft mit 140 bezeichneter Antriebsmechanismus (Fig.3) für die Bewegung der Transferkammer sowie ein Auf- und Abspulantrieb 150 (Fig.6) für eine in der Transferkammer befindliche Patrone P montiert sind. Ferner sind im Montagerahmen 110 noch diverse Fühler für die Steuerung der Bewegungsabläufe vorgesehen, auf die weiter unten noch eingegangen wird. Der Antriebsmechanismus 140 implementiert die weiter unten beschriebenen Bewegungsabläufe mittels diverser, nicht bezeichneter Gestänge, Hebel und Kurvenscheiben sowie eines Antriebsmotors 141, welcher diese Teile antreibt.

Die rohrförmige, an ihren beiden Enden offene Vorratskammer 120 hat einen an die äussere Form von APS-Film-Patronen angepassten inneren Querschnitt und kann gleichzeitig mehrere, im gezeigten Beispiel drei, APS-Film-Patronen P koaxial hinter-bzw. übereinander in definierter Orientierung aufnehmen. Die Transferkammer 130 ist innen analog ausgebildet, kann aber jeweils nur eine einzelne Patrone P in definierter Orientierung in sich aufnehmen.

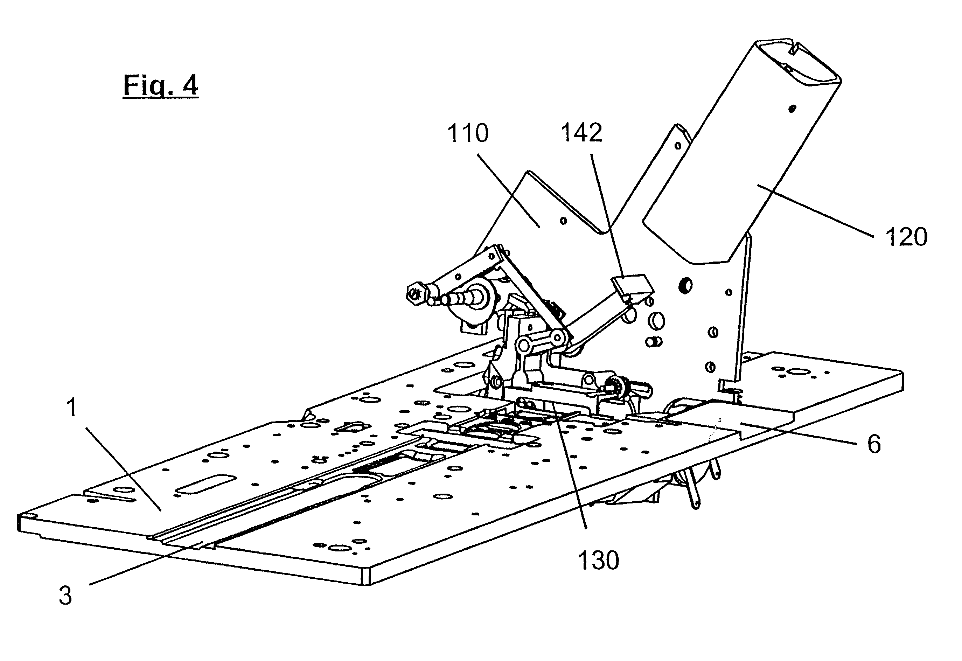

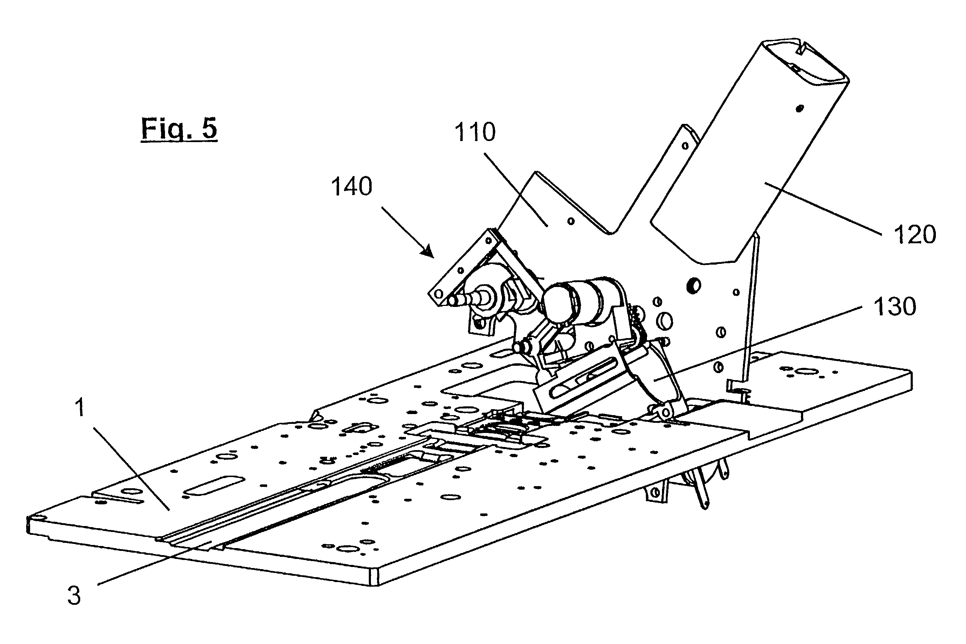

Die Transferkammer 130 kann mittels des Antriebsmechanismus 140 von einer in Figur 3 gezeigten Ladeposition über eine in Figur 5 dargestellte Auswurfposition in eine in Figur 4 gezeigte Arbeitsposition und wieder zurück bewegt werden und dabei eine in ihr befindliche Patrone P in die entsprechenden Positionen transportieren. In der Ladeposition ist die Transferkammer 130 im wesentlichen koaxial zur Vorratskammer 120 ausgerichtet, in der Arbeitsposition liegt ihre Achse parallel zur Ebene der Grundplatte 1 und senkrecht zur Längsrichtung der Filmführung 3. Die Auswurfposition befindet sich etwa in der Mitte zwischen der Lade- und der Arbeitsposition. Die Transferkammer 130 bildet zusammen mit dem Antriebsmechanismus 140 und dem Auf- und Abspulantrieb 150 Transfermittel, welche vollautomatisch die in der Vorratskammer 120 befindlichen Patronen P sequentiell aus der Vorratskammer entnehmen, in die Arbeitsposition bringen, den in den Patronen P befindlichen Film F teilweise aus den Patronen entnehmen und den Filmtransportmitteln 11-14 übergeben und die Patronen P nach dem Zurückspulen des Films F in dieselben durch die Auswurföffnung 6 auswerfen. Im einzelnen wird darauf noch weiter unten eingegangen.

Die Funktionsweise der Ladevorrichtung bzw. der mit dieser ausgestatteten Filmbühne und die typischen Bewegungsabläufe lassen sich am besten anhand der Figuren 6-14 erkennen, welche sehr stark vereinfachte Ansichten in Richtung des Pfeils A der Figur 2 bzw. einen auf das Wesentliche reduzierten Schnitt nach der Linie X-X der Figur 2 darstellen.

Der Operator führt einen oder vorzugsweise mehrere APS-Film-Patronen P in die Vorratskammer 120 ein, wobei ein wegschwenkbarer Riegel 142 des Antriebsmechanismus 140 zunächst das Herausfallen der untersten Patrone P aus der unten offenen Vorratskammer 120 verhindert. Die Transferkammer 130 ist dabei nicht ganz koaxial zur Vorratskammer 120 ausgerichtet, sie befindet sich also etwas ausserhalb der Verlängerung der Vorratskammer 120 (Fig.6). In bzw. unter der Ebene der Grundplatte 1 der Filmbühne befindet sich der schon genannte, als Ganzes mit 150 bezeichnete Auf- und Abspulantrieb, welcher im wesentlichen aus einer feststehenden Antriebseinheit 151 und einer schwenkbaren Lagereinheit 152 besteht, wobei letztere ebenfalls vom Antriebsmechanismus 140 angetrieben ist. Die feststehende Antriebseinheit 151 umfasst im wesentlichen einen motorischen Drehantrieb 153 für den Filmwickel in der Patrone sowie einen Öffnungsstift 154, um die bei APS-Film-Patronen vorgesehene Lichtklappe zu öffnen. Solche Öffnungs- und Antriebsmechanismen für APS-Film-Patronen sind dem Fachmann an sich bekannt und bedürfen deshalb keiner näheren Erläuterung.

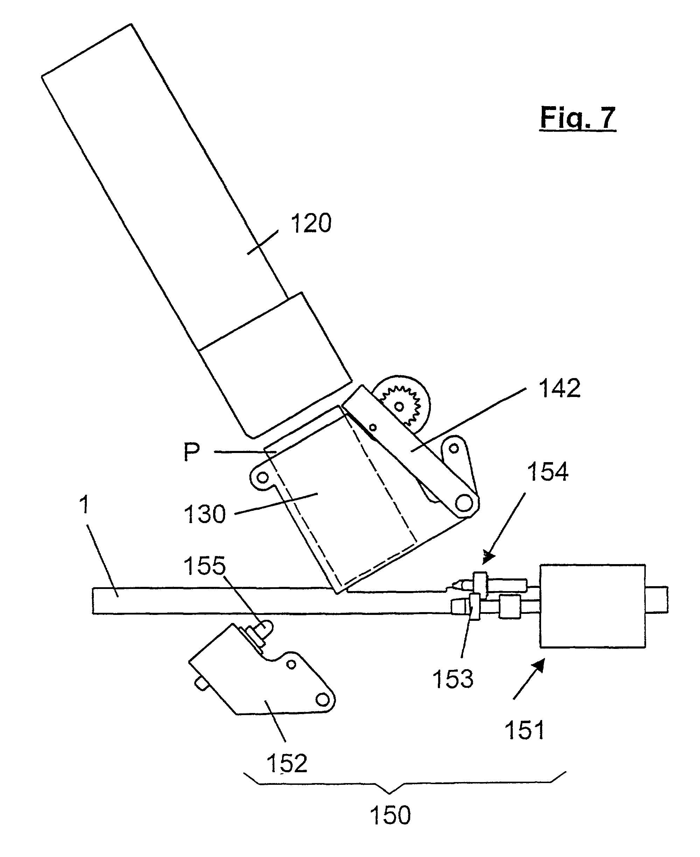

Sobald eine seitlich neben der Vorratskammer 120 angeordnete Lichtschranke 143 das Vorhandensein einer Patrone P in der Vorratskammer 120 signalisiert, setzt sich der Antriebsmechanismus 140 in Gang und schwenkt den Riegel 142 zur Seite sowie die Transferkammer in die Verängerung der Vorratskammer 120, so dass eine Patrone P aufgrund ihres Gewichts aus der Vorratskammer 120 nach unten in die Transferkammer 130 fällt bzw. gleitet (Fig.7).

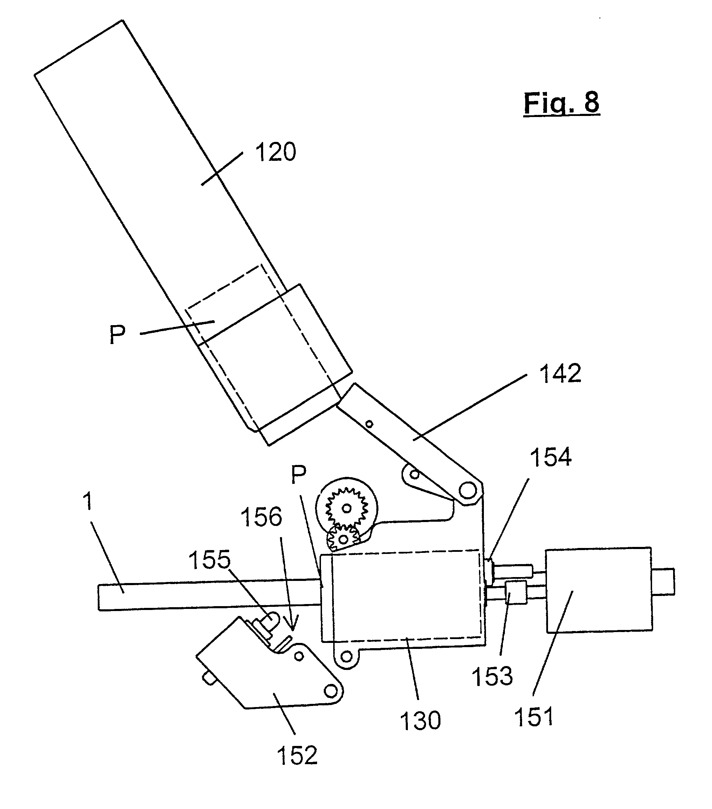

Danach wird die Transferkammer 130 nach unten in ihre Arbeitsposition geschwenkt, wobei der Riegel 142 wieder in die Ausgangsposition zurückschwenkt, so dass die nachrutschenden Patronen nicht aus der Vorratskammer 120 herausfallen können (Fig.8).

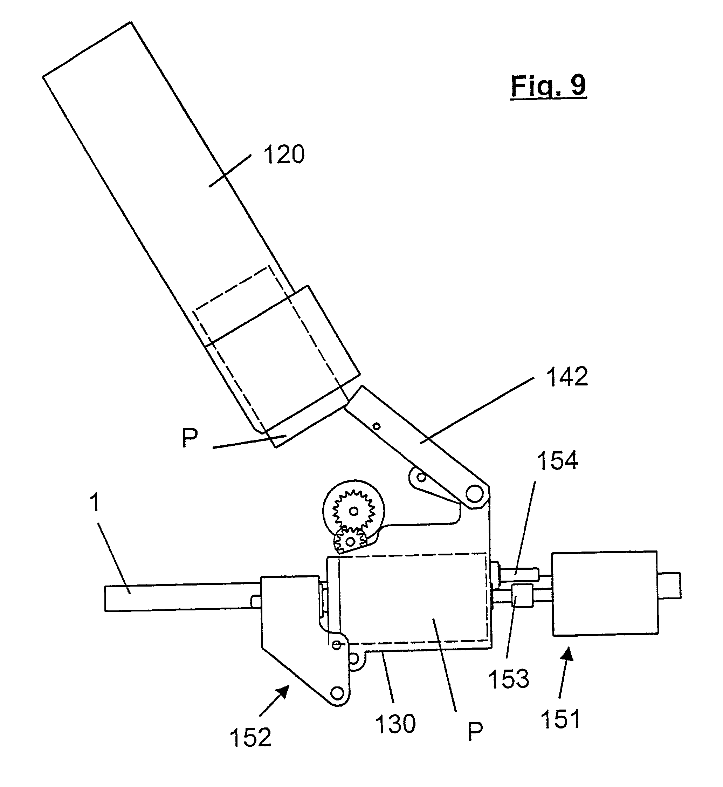

In der Arbeitsposition wird nun die in der Transferkammer 130 befindliche Patrone P an den Auf- und Abspulantrieb 150 angekoppelt. Dabei wird die schwenkbare Lagereinheit 152 in die in Fig.9 gezeigte Stellung gebracht, wobei ein in ihr vorgesehener Lagerdorn 155 an der einen Patronenstirnseite in den Filmwickelkern eingreift und damit diesen lagert bzw. zentriert. An der anderen Patronenstirnseite gelangt der dort herausragende Filmwickelkern in Eingriff mit der Antriebseinheit 151 des Auf- und Abspulantriebs 150 und wird auf diese Weise an diesen kinematisch angekoppelt.

In der Lagereinheit 152 des Auf- und Abwickelantriebs 150 ist ferner eine Lichtschranke 156 vorgesehen (Fig.8), welche die an der Stirnseite der Patrone P standardmässig vorhandenen Kodierungen abtastet und auf diese Weise feststellt, ob sich in der Patrone ein entwickelter Film befindet. Sollte dies nicht zutreffen, werden die folgenden Operationen übersprungen und die Patrone wie weiter unten beschrieben ausgeworfen.

Falls sich ein entwickelter Film in der in Arbeitsposition befindlichen Patrone befindet, betätigt der Öffnungsstift 154 die Lichtklappe in der Patrone P und öffnet diese. Dann wird der Auf- und Abspulantrieb 150 in Gang gesetzt und dabei der in der Patrone P befindliche Film F so weit aus der Patrone herausgestossen, bis er in Eingriff mit der Transportwalze 11 der Filmtransportmittel auf der Filmbühne kommt und so diesen übergeben wird (Fig.10). Nun wird der Film von den Filmtransportmitteln weiter aus der Patrone P gezogen und in der Filmführung 3 entlang des Filmpfads über die Filmbühne bewegt. Das Filmende verbleibt jedoch verbunden mit der Patrone bzw. deren Wickelkern. Während des Transports des Films über die Filmbühne laufen die einzelnen Bildrahmen (Negative) in an sich bekannter Weise unter verschiedenen optischen und magnetischen Abtasteinheiten 7-9 durch und gelangen schliesslich in eine Belichtungsposition 10, wo der eigentliche Kopiervorgang stattfindet. Wenn alle Bildrahmen kopiert sind, schieben die Filmtransportmittel 11-14 den Film wieder in die Patrone P zurück, wobei der Auf- und Abwickelantrieb 150 den Film wieder auf den Wickelkern in der Patrone aufwickelt.

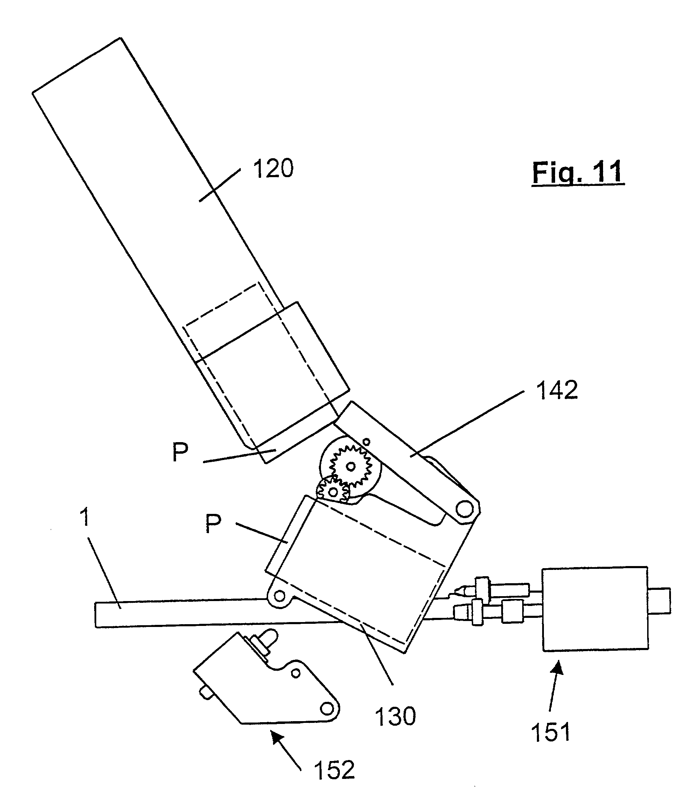

Nun wird die Lagereinheit 152 des Auf- und Abwickelantriebs 150 mittels des Antriebsmechanismus 140 wieder in ihre Ausgangslage weggeschwenkt und die Transferkammer 130 in ihre Auswurfposition bewegt (Fig.11).

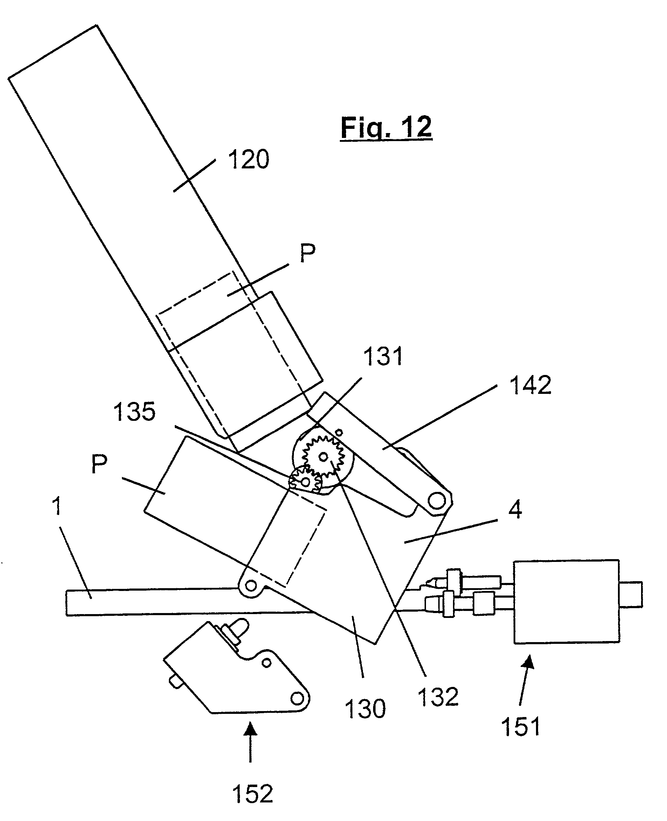

Auf der Transferkammer 130 ist ein Auswurfmotor 131 angeordnet, welcher über Zahnräder 132 ein Gummirad 133 antreibt, das an der Aussenwand der in der Transferkammer 130 befindlichen Patrone P angreift. Der Auswurfmotor wird nun in Gang gesetzt und dadurch die Patrone P aus der Transferkammer 130 ausgestossen (Fig.12). Die Patrone P fällt im Bereich der Auswurföffnung 6 auf die Grundplatte 1 und kann dort vom Operator entnommen werden.

Anschliessend wird die Transferkammer 130 wieder in ihre Ladeposition bewegt (Fig.6), wo sie dann die nächste bereitstehende Patrone P aus der Vorratskammer übernimmt, wobei sich die vorstehend beschriebenen Abläufe in gleicher Weise wiederholen, bis keine Patrone mehr in der Vorratskammer enthalten ist.

Wie schon erwähnt, ist die Erfindung in erster Linie für die Anwendung im Zusammenhang mit APS-Film bzw. APS-Film-Patronen gedacht. Sie ist aber selbstverständlich auch einsetzbar für jeden anderen Filmtyp, der bei der Verarbeitung teilweise in der Patrone verbleibt und nach der Verarbeitung wieder in die Patrone zurückgespult wird.

## Patentansprüche

1. Ladevorrichtung für eine einen Film enthaltende Film-Patrone für ein fotografisches Kopiergerät, bei dem der Film für die Verarbeitung teilweise aus der Patrone entnommen und nach der Verarbeitung wieder in die Patrone zurückgespult wird, mit Mitteln (130) zum Positionieren einer Patrone (P) in einer Arbeitsposition, mit motorisch antreibbaren Abspulmitteln (150) zum teilweisen Entnehmen des in der Patrone aufgespult vorliegenden Films (F) aus der Patrone und zur Übergabe an im Kopiergerät vorgesehene Filmtransportmittel, mit motorisch antreibbaren Aufspulmitteln (150) zum Zurückspulen des Films in die Patrone, und mit einer Vorratskammer (120) zur Aufnahme von mindestens zwei Patronen (P) in definierter Orientierung sowie Transfermittel (130-150), die derart angeordnet sind, dass sie vollautomatisch die in der Vorratskammer (120) befindlichen Patronen (P) sequentiell aus der Vorratskammer entnehmen, in die Arbeitsposition bringen, den in den Patronen befindlichen Film (F) teilweise aus den Patronen entnehmen und den Filmtransportmitteln (11-14) übergeben und die Patronen (P) nach dem Zurückspulen des Films in dieselben auswerfen, **dadurch gekennzeichnet, dass** die Vorratskammer (120) derart angeordnet ist, dass die mindestens zwei patronen (P) koaxial in der Vorratskammer (120) gelagert werden.

2. Vorrichtung nach Anspruch 1, weiter **dadurch gekennzeichnet, dass** die Transfermittel (130-150) eine motorisch angetriebene Transferkammer (130) aufweisen, welche zur Aufnahme einer einzelnen Patrone (P) in definierter Orientierung ausgebildet ist und von einer Ladeposition über eine Auswurfposition in eine Arbeitsposition und zurück bewegbar ist.

3. Vorrichtung nach Anspruch 2, weiter **dadurch gekennzeichnet, dass** Übergabemittel (142) vorgesehen sind, welche bei in Ladeposition befindlicher Transferkammer (130) eine einzelne Patrone (P) von der Vorratskammer (120) in die Transferkammer (130) übergeben.

4. Vorrichtung nach einem der Ansprüche 2-3, weiter **dadurch gekennzeichnet, dass** Prüfmittel (156) vorgesehen sind, welche durch Abtasten der Kodierung der Patrone (P) erkennen, ob eine in der Transferkammer (130) befindliche Patrone (P) einen entwikkelten Film enthält, und welche den Auswurf der Patrone (P) aus der Transferkammer (130) veranlassen, wenn kein entwickelter Film erkannt wurde.

5. Vorrichtung nach einem der Ansprüche 2-4, weiter **dadurch gekennzeichnet, dass** Auswurfmittel (131-133) vorgesehen sind, welche bei in Auswurfstellung befindlicher Transferkammer (130) die in dieser enthaltene Patrone (P) aus der Transferkammer auswerfen können.

6. Vorrichtung nach Anspruch 5, weiter **dadurch gekennzeichnet, dass** die Auswurfmittel (131-133) an der Transferkammer (130) und mit dieser mitbeweglich angeordnet sind.

7. Vorrichtung nach einem der Ansprüche 2-6, weiter **dadurch gekennzeichnet, dass** die motorisch antreibbaren Abspul- und Aufspulmittel (150) bei in Arbeitsposition befindlicher Transferkammer (130) lösbar an die in der Transferkammer enthaltene Patrone (P) ankoppelbar sind.

8. Filmbühne für ein fotografisches Kopiergerät mit Transportmitteln (11-14) zum Transport des Films (F) längs eines Filmtransportpfades (3) in eine Belichtungsposition (10), welche mit einer Ladevorrichtung für eine einen Film enthaltende Film-Patrone gemäss einem der vorangehenden Ansprüche ausgestattet ist.

## Claims

1. Loading device for a film cartridge containing a film for a photographic copier unit, in which the film is partially extracted from the cartridge for processing and after processing again wound back into the cartridge, with means (130) for positioning of a cartridge (P) in an operating position with motorised drivable wind-off means (150) for partial extraction of the wound up film (F) present in the cartridge from the cartridge and for transfer to film conveyance means provided in the copier unit, with motorised drivable wind-on means (150) for winding back the film into the cartridge and with a supply chamber (120) for accepting of at least two cartridges (P) in defined orientation and transfer means (130 - 150), which are arranged such that they extract fully automatically the cartridges situated in the supply chamber (120) sequentially from the supply chamber, convey to the operating position, extract the film (F) situated in the cartridges partially from the cartridges and transfer the film to the film conveyance means (11 - 14) and eject the cartridges (P) after winding back the film in to the said cartridges, **characterised in that** the supply chamber (120) is arranged such that the two cartridges (P) at least are coaxially located in the supply chamber (120).

2. Device according to claim 1, further **characterised in that** the transfer means (130 - 150) feature a motorised driven transfer chamber (130), which is designed to accept one individual cartridge (P) in defined orientation and is movable from a loading position in to an operating position by way of an ejection position and back.

3. Device according to claim 2, further **characterised in that** transfer means (142) are provided, which with the transfer chamber (130) situated in the loading position transfer an individual cartridge (P) from the supply chamber (120) in to the transfer chamber (130).

4. Device according to any of the claims 2 - 3, further **characterised in that** checking means (156) are provided, which through scanning of the coding of the cartridge (P) detect whether a cartridge (P) situated in the transfer chamber (130) contains a developed film, and which initiate the ejection of the cartridge (P) from the transfer chamber (130) if no developed film is detected.

5. Device according to any of the claims 2 - 4, further **characterised in that** ejection means (131 - 133) are provided, which with the transfer chamber (130) situated in ejection position can eject the cartridge (P) contained therein from the transfer chamber.

6. Device according to claim 5, further **characterised in that** the ejection means (131 - 133) are arranged on the transfer chamber (130) and are movable in conjunction with the said transfer chamber.

7. Device according to any of the claims 2 - 6, further **characterised in that** the motorised drivable wind-off and wind-on means (150) are able to couple in a detachable manner to the cartridge (P) contained in the transfer chamber with the transfer chamber (130) situated in the operating position.

8. Film carrier for a photographic copier unit having conveyance means (11 - 14) for conveying the film (F) along a film conveyance path (3) in to a light exposure position (10), which is equipped with a loading device for a film cartridge containing a film in accordance with any of the afore-stated claims.

## Revendications

1. Dispositif de chargement d'une cartouche de film contenant un film pour un appareil de tirage photographique, dans lequel le film est partiellement extrait de la cartouche pour le traitement et, à l'issue du traitement, est réenroulé dans la cartouche, avec des moyens (130) pour positionner une cartouche (P) dans une position de travail, avec des moyens de déroulement à entraînement motorisé (150) pour extraire partiellement de la cartouche le film (F) qui y est enroulé et pour le transmettre à des moyens de transport de film prévus dans l'appareil de tirage, avec des moyens d'enroulement à entraînement motorisé (150) pour réenrouler le film dans la cartouche, et avec une chambre de réserve (120) pour recevoir au moins deux cartouches (P) dans une orientation définie ainsi que des moyens de transfert (130-150) qui sont disposés de façon à extraire automatiquement et séquentiellement de la chambre de réserve (120) les cartouches (P) qui y sont placées, à les amener en position de travail, à extraire partiellement des cartouches le film (F) qui s'y trouve, à le transmettre aux moyens de transport de film (11-14), et à éjecter les cartouches (P) après réenroulement du film dans celles-ci, **caractérisé en ce que** la chambre de réserve (120) est disposée de façon que les cartouches (P), au nombre d'au moins deux, soient logées coaxialement dans la chambre de réserve (120).

2. Dispositif selon la revendication 1, **caractérisé en outre en ce que** les moyens de transfert (130-150) comportent une chambre de transfert à entraînement motorisé (130) qui est conçue pour recevoir une seule cartouche (P) dans une orientation définie et pour se déplacer d'une position de chargement vers une position de travail en passant par une position d'éjection, et inversement.

3. Dispositif selon la revendication 2, **caractérisé en outre en ce que** sont prévus des moyens de transmission (142) qui, lorsque la chambre de transfert (130) se trouve en position de chargement, transmettent une seule cartouche (P) de la chambre de réserve (120) à la chambre de transfert (130).

4. Dispositif selon l'une des revendications 2-3, **caractérisé en outre en ce que** sont prévus des moyens de contrôle (156) qui, en analysant le codage de la cartouche (P), déterminent si une cartouche (P) se trouvant dans la chambre de transfert (130) contient un film développé, et qui provoquent l'éjection de la cartouche (P) hors de la chambre de transfert (130) si aucun film développé n'a été détecté.

5. Dispositif selon l'une des revendications 2-4, **caractérisé en outre en ce que** sont prévus des moyens d'éjection (131-133) qui, lorsque la chambre de transfert (130) se trouve en position d'éjection, peuvent éjecter la cartouche (P) qui s'y trouve hors de la chambre de transfert.

6. Dispositif selon la revendication 5, **caractérisé en outre en ce que** les moyens d'éjection (131-133) sont disposés sur la chambre de transfert (130) et avec la possibilité de se déplacer avec celle-ci.

7. Dispositif selon l'une des revendications 2-6, **caractérisé en outre en ce que**, lorsque la chambre de transfert (130) se trouve en position de travail, les moyens de déroulement et d'enroulement à entraînement motorisé (150) peuvent être accouplés de manière détachable à la cartouche (P) contenue dans la chambre de transfert.

8. Presse-film pour un appareil de tirage photographique avec des moyens de transport (11-14) pour transporter le film (F) suivant un trajet de transport de film (3) jusqu'à une position d'insolation (10), ledit presse-film étant équipé d'un dispositif de chargement d'une cartouche de film contenant un film, conforme à l'une des revendications précédentes.
